Europäisches Patentamt

European Patent Office

Office européen des brevets

(11) Numéro de publication: **0 254 604**
**A1**

## DEMANDE DE BREVET EUROPEEN

(21) Numéro de dépôt: **87401299.0**

(51) Int. Cl.4: **B 65 G 17/06**

(22) Date de dépôt: **10.06.87**

(30) Priorité: **11.06.86 FR 8608451**

(43) Date de publication de la demande:
**27.01.88 Bulletin 88/04**

(84) Etats contractants désignés:
**AT BE CH DE ES FR GB GR IT LI LU NL SE**

(71) Demandeur: **TISSMETAL S.A.**
**20-22, Chaussée Bocquaine**
**F-51052 Reims (FR)**

(72) Inventeur: **Monfils, Bernard**
**3, rue de Champigny**
**F-51430 Tinqueux (FR)**

(74) Mandataire: **Derambure, Christian**
**BUGNION ASSOCIES 116, Boulevard Haussmann**
**F-75008 Paris (FR)**

(54) Dispositif transporteur à bande sans fin dont les modules ne participent pas à l'effort d'entraînement.

(57) L'invention concerne un dispositif transporteur à bande sans fin dans lequel chaque module (4) est associé à deux tringles (2', 2") qui se suivent dans la direction de déplacement de la bande, les tringles (2', 2") étant associées rigidement les unes aux autres par des moyens d'association spécifiques des modules (4), caractérisé en ce que chaque module (4) est associé à au moins une tringle (2) par des moyens (5) d'association limitant ses déplacements par rapport à cette tringle (2) perpendiculairement au plancher P du module (4), mais autorisant un déplacement longitudinal de cette tringle (2) dans le sens de son dégagement du module (4), de sorte que l'effort d'entraînement de la bande (1) est transmis le long de la bande (1) par les moyens d'association spécifiques des tringles (2) entre elles et supporté uniquement par la structure de la bande (1).

EP 0 254 604 A1

Bundesdruckerei Berlin

## Description

### DISPOSITIF TRANSPORTEUR A BANDE SANS FIN DONT LES MODULES NE PARTICIPENT PAS A L'EFFORT D'ENTRAINEMENT

L'invention concerne un dispositif transporteur à bande sans fin du type dans lequel la bande est constituée d'une structure comportant des tringles transversales espacées et parallèles les unes aux autres auxquelles et entre lesquelles sont associés à pivotement des modules sensiblement plans de support de la charge, de façon à définir une surface continue de transport, chaque module étant associé à deux tringles qui se suivent dans la direction longitudinale de déplacement de la bande, les tringles étant associées rigidement les unes aux autres par des moyens d'association spécifiques distincts des modules.

On connâit déjà du brevet européen 2137 un tel transporteur à bande sans fin qui comporte en outre des moyens pour suivre aisément un trajet sinueux. Il est aussi connu de ce document que les tringles sont maintenues à distance les unes des autres par des maillons supportant l'effort de traction, alors que les éléments de support de la charge, inamovibles, sont montés flottant sur les tringles et ne sont soumis qu'à la charge. Les modules de support d'un tel transporteur ne peuvent pas être remplacés rapdiement sans démontage de toute la bande. Ils ont de plus des formes complexes, requièrent beaucoup de matiére et sont onéreux à fabriquer.

On connaît aussi par exemple, des demandes de brevets français 2 114 017 et 2 152 948 des transporteurs à bande sans fin dont les éléments supportant la charge sont modulaires en matière coulée ou moulée telle qu'une matiére plastique et qui peuvent être articulés aux tringles transversales de façon amovible. On sait également de ces documents que pour pouvoir donner und trajectoire sinueuse à la bande, au moins certains oeillets d'articulation des modules doivent avoir und forme ovale. Ces dispositifs transporteurs connus donnent satisfaction. Ils offrent en particulier l'avantage que les modules peuvent être changés rapidement. De plus, dans le transporteur décrit dans le brevet européen 2137 et dans la demande de brevet français 2 152 948, les tringles sont reliées les unes aux autres, ce qui évite la mise hors service immédiate du transporteur dans le cas où les modules viendraient à casser, comme c'est le cas . pour les transporteurs décrits dans les demandes de brevets français 2 114 017 et 2 536 049.

Cependant, tous ces dispositifs connus ont comme incovénient majeur d'être surdimensionnés et leur prix de revient est excessif. En effet, les modules de matière plastique moulés doivent avoir une résistance trés importante pour être susceptibles de supporter l'effort d'entraînement longitudinal qu'ils transmettent le long de la bande. Dans les dispositifs connus, les tringles ont essentiellement pour fonction d'assembler les modules les uns aux autres, et les modules doivent pouvoir soit coopérer directement avec les moyens d'eintrainement de la bande, soit au moins transverse la majeure partie de l'effort d'entraînement le long de la bande, Or, il s'avère que cet effort est extrêment important en pratique, surtout si le poids de la charge est important. De plus, si les modules sont réalisés en matière synthétique plus résistante, d'une part ils coûtent plus cher, et d'autre part l'effort d'entraînement est plus important car les modules sont plus lourds. Par conséquent, il s'avère en pratique que les modules connus ne peuvent pas transporter des charges importantes, malgré les efforts que l'on a fait (demande de brevet français 2 264 738) en vue de réduire les frottements qui augmentent l'effort d'entraînement nécessaire. En pratique, avec des modules connus, qui sont réalisés en polyacétate ou en polyamide, la charge maximum que l'on peu transporter est de l'ordre de 50kg/m$^2$ de bande. Par ailleurs, lorsque les modules ne participent pas à l'effort de traction des dispositions particulières doivent être prévues pour les trajets sinueux et il est difficile de réaliser des modules amovibles.

La présente invention vise à remédier à ces inconvénients, et a pour objet un dispositif transporteur qui peut transporter des charges de poids plus élevé bien que les modules soient amovibles et en matière moins résistante que dans l'art antérieur. Un autre objet de l'invention est de réduire le coût d'un tel transporteur par rapport à ceux de l'état de la technique. Un autre objet de l'invention est de réduire le poids des modules et de l'ensemble de l'installation.

Pour ce faire, l'invention propose un dispositif transporteur à bande sans fin dans lequel la bande est constituée d'une structure comportant des tringles transversales espacées et parallèles les unes aux autres auxquelles et entre lesquelles sont associés à pivotement des modules sensiblement plans de support de la charge, de façon à définir une surface continue de transport, chaque module étant associé à deux tringles qui se suivent dans la direction de déplacement de la bande, les tringles étant associées rigidement les unes aux autres par des moyens d'association spécifiques, chaque modules étant associé à au moins une tringle par des moyens d'association limitant ses déplacements par rapport à cette tringle et perpendiculairement au plan P du module, mais autorisant un déplacement longitudinal de cette tringle dans le sens de son dégagemenet du module de sorte que l'effort d'entraînement de la bande est transmis le long de la bande par les moyens d'association spécifiques des tringles entre elles et supporté uniquement par la structure de la bande, caractérisé en ce que les moyens d'association des modules aux tringles sont des moyens d'association amovible autorisant un démontage ou un montage des modules de ou sur la structure.

De préférence, chaque module est associé à une tringle, notamment la tringle en aval, par les moyens d'association autorisant un déplacement longitudinal du module dans le sens de son dégagement de cette tringle, et est associé à l'autre tringle, notamment la tringle en amont, par des moyens d'articulation limitant ses déplacements (autres que les pivotements) par rapport à cette tringle dans toutes les directions.

Selon une autre caractéristique de l'invention, la bande est constituée en largeur d'une pluralité de modules associés aux mêmes tringles, et les moyens d'association spécifiques des tiges entre elles comportent au moins une rangée longitudinale de plaquettes intermédiaires de renfort, chaque plaquette étant associée articulée à deux tringles et étant intercalée entre deux modules qui se jouxtent entre les deux tringles pour maintenir localement les tringles à une distance constante les unes des autres en transmettant l'effort d'entraînement le long de la bande. De plus, les moyens d'association spécifiques des tringles entre elles comportent au moins une rangée longitudinale de plaquettes de rive associées articulées aux tringles de telle sorte qu'elles empêchent les modules d'échapper transversalement aux tringles. Les moyens d'entraînement coopèrent uniquement avec la structure, c'est-à-dire avec les tringles et/ou avec les moyens d'association spécifiques des tringles entre elles (plaquettes intermédiaires ou de rive).

Ainsi, les modules ne supportant que le poids de la charge, sans participer à l'entraînement. Ils peuvent donc être en matière synthétique légère, peu résistante, et donc bon marché alors que le dispositif selon l'invention permet de transporteur des charges aussi lourdes que possible. Par exemple, les modules selon l'invention peuvent être réalisés en polypropylène, dont le prix au kilogramme est environ trois fois inférieur au prix des polyamides ou polyacétates. On a constaté qu'un transporteur selon l'invention avec de tels modules peuvent porter une charge supérieure à 100kg/m$^2$ de bande, notamment de l'ordre de 150kg/m$^2$. De plus, les modules peuvent être changés sans démontage de la structure.

L'invention sera mieux comprise à la lecture de la description suivante se référant aux figures annexées dans lesquelles:

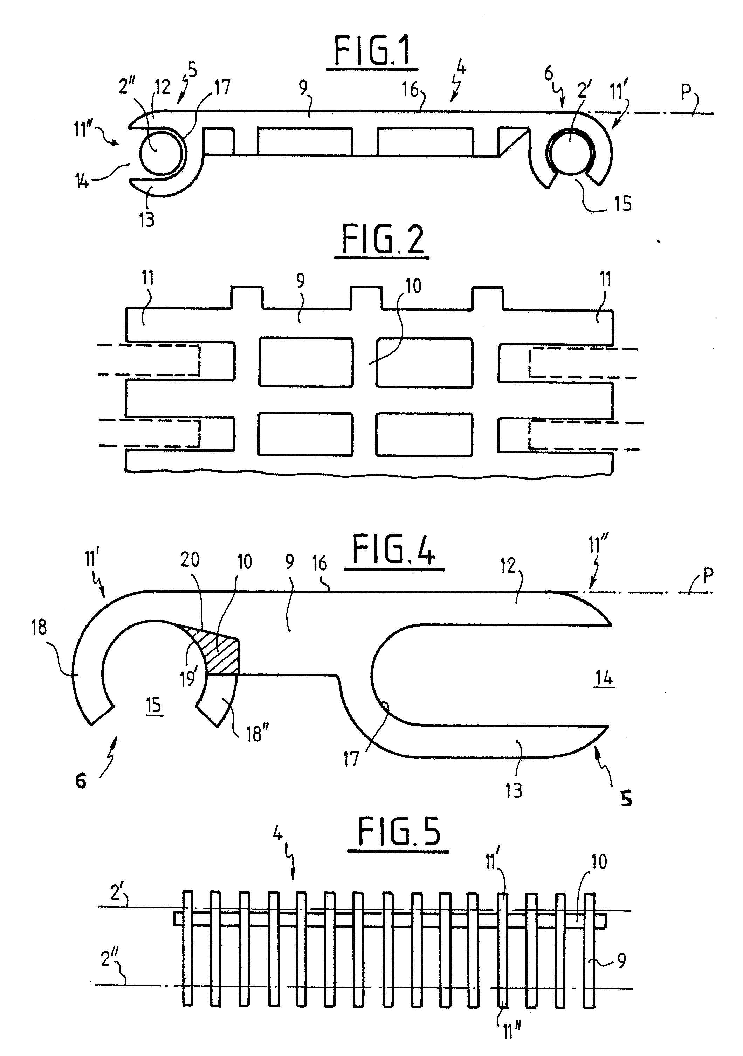

. La figure 1 est une vue de profil transversalement d'un module selon un premier mode de réalisation d'un dispositif selon l'invention.

. La figure 2 est une vue partielle de dessus d'un module selon le premier mode de réalisation d'un dispositif selon l'invention.

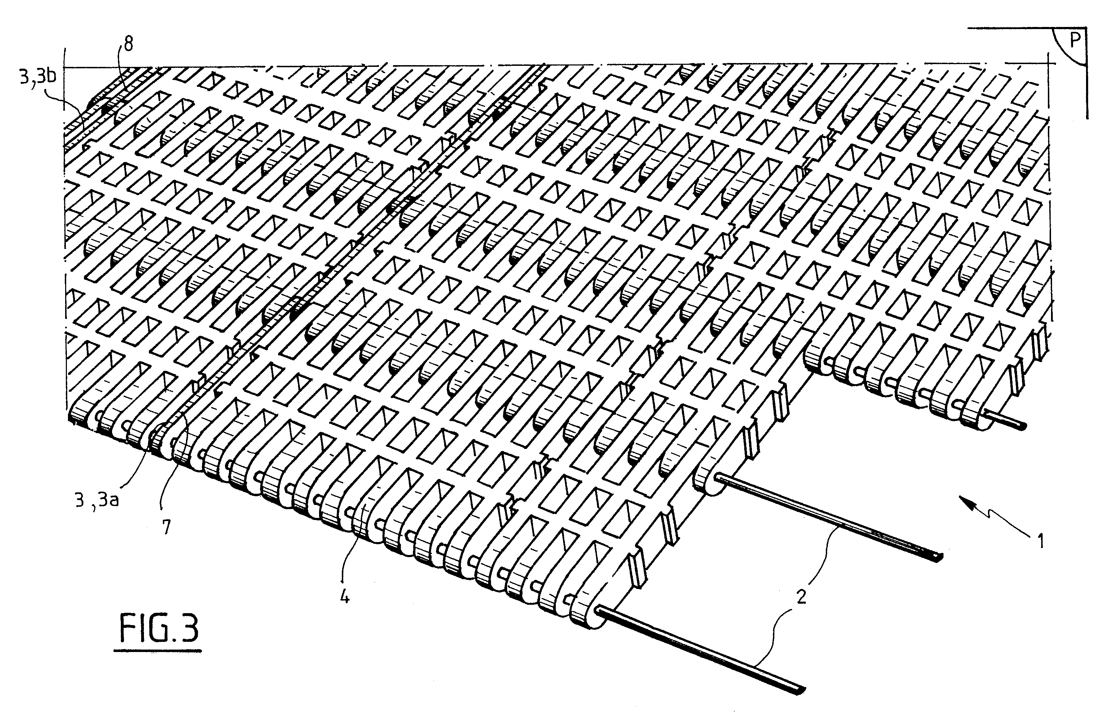

. La figure 3 est une vue partielle en perspective d'une bande d'un dispositif selon l'invention.

. La figure 4 est une vue de profil transversalement d'un module selon un second mode de réalisation d'un dispositif selon l'invention.

. La figure 5 est une vue de dessus à moindre échelle d'un module selon le second mode de réalisation d'un dispositif selon l'invention.

L'invention concerne un dispositif transporteur à bande 1 sans fin. Dans un tel transporteur, la bande 1 supporte une charge constituée généralement d'une succession d'articles, et est entraînée à défilement continu par des moyens d'entraînement constitués par exemple de roues, pignons, cylindres ou autres. De tels moyens d'entraînement, connus de l'art antérieur, (par exemple, demande européenne 0054752) ne seront pas décrits en détail ci-après.

La bande 1 sans fin, forme généralement une boucle fermée aplatie dont un au moins des deux segments allongés définit une surface continue de transport sensiblement plane.

On définit normalement la direction longitudinale comme étant la direction de déplacement de la bande 1 ou de la surface continue de transport, et la direction transversale comme étant la direction parallèle au plan P de la bande 1 et perpendiculaire à la direction longitudinale.

La bande 1 sans fin est constituée d'une part d'une structure constituée de tringles 2 transversales espacées et parallèles les unes aux autres et de moyens 3 spécifiques d'association des tringles entre elles, et d'autre part de modules 4 sensiblement plans de support de la charge. Chacun de ces modules 4 est associé de façon amovible et à pivotement à et entre deux tringles 2 qui se suivent dans la direction de déplacement de la bande 1 : une tringle située en amont 2' (par rapport au sens de déplacement de la bande 1) et une tringle située en aval 2". Les modules 4 définissent ainsi la surface continue de transport, le plan P des modules 4 définissant localement le plan P de la bande 1.

Les moyens 3 d'association spécifiques des tringles 2 entre elles sont distincts des modules 4. De plus, les modules 4 autorisent localement une modification, notamment une augmentation, de l'écartement entre une tringle 2' située en amont et une tringle 2" située en aval. Pour ce faire, chaque module 4 est associé à au moins une tringle 2 par des moyens 5 d'association limitant ses déplacement par rapport à cette tringle 2 perpendiculairement au plan P du module 4, mais autorisant un déplacement longitudinal de la tringle 2 dans le sens de son dégagement du module 4. Ainsi, l'effort d'entraînement de la bande 1 est transmis le long de cette bande 1 part les moyens 3 spécifiques d'association des tringles 2 entre elles et est supporté uniquement par la structure de la bande 1. Les modules 4 ne participent donc pas à l'entraînement du dispositif selon l'invention.

Chaque module 4 est associé à la tringle située en aval 2" -et/ou respectivement à la tringle située en amont 2'- par des moyens 5 d'association autorisant un déplacement longitudinal de cette tringle en aval 2" -et/ou respectivement en amont 2'- par rapport au module 4 dans le sens de l'aval - et/ou respectivement de l'amont- c'est-à-dire de son dégagement du module 4. Ces moyens 5 d'association sont des moyens d'association amovible en ce sens qu'ils autorisent une dissociation ultérieure immédiate du module 4 par rapport à la tringle 2.

En variante (non représentée) chaque module 4 est associé à chacune des tringles 2', 2" qui le supportent par des moyens 5 autorisant un déplacement longitudinal de cette tringle 2', 2" dan les sens du dégagement de cette tringle 2', 2" du module 4. Cette variante sera plus avantageuse dans le cas où le transporteur devra pouvoir fonctionner dans les deux sans de déplacement de la bande 1.

En variante préférentielle, chaque module 4 est associé à une tringle 2″ ou 2′, de préférence la tringle en aval 2″, par les moyens 5 d'association autorisant un déplacement longitudinal, et est associé à l'autre tringle 2′ ou 2″, de préférence la tringle en amont 2′ par des moyens 6 d'articulation limitant les déplacemens du module 4 par rapport à cette tringle 2′ ou 2″ dans toutes les directions.

Les moyens 6 d'articulation pourraient en variante être prévus pour associer le module 4 à la tringle en aval 2″ plutôt qu'à celle en amont 2′. Comme on l'a compris, ces moyens 6 d'articulation n'associent en tous cas qu'une seule tringle 2 à un même module 4, l'autre tringle pouvant se déplacer longitudinalement par rapport au module 4.

Le moyens 6 d'articulation sont des moyens d'association amovible, autorisant un démontage ou un montage rapide des modules 4 de ou sur la structure.

Selon une caractéristique essentielle de l'invention, la bande 1 est constituée dans la largeur d'une pluralité de modules 4 associés aux mêmes tringles 2′, 2″. Les moyens 3 d'association spécifiques des tringles 2′, 2″ entre elles comportent au moins une rangée 3a longitudinale de plaquettes intermédiaires 7 de renfort, chaque plaquette 7 étant associée articulée à pivotement à chacune des deux tringles 2′, 2″ et étant intercalée entre deux modules 4 qui se jouxtent et qui sont associés aux mêmes tringles 2′, 2″. Les plaquettes 7 maintiennent donc localement les tringles 2′, 2″ à une distance constante les unes des autres en transmettant l'effort d'entraînement le long de la bande 1.

Une telle rangée 3a de plaquettes intermédiaires 7 peut être prévue entre chaque paire de modules 4 si cela s'avère nécessaire, c'est-à-dire si l'effort d'entraînement est très important. Cependant, en pratique, on pourra prévoir une telle rangée 3a de plaquettes 7 tous les trois, ou quatres, ou n modules 4, n étant un entier supérieur à quatre.

Dans le cas de petites largeurs de bande 1 et pour de faibles charges, on pourra même se passer de cette rangée 3a de plaquettes 7 de renfort, dès lors que les moyens 3 d'association spécifiques des tringles 2 entre elles comportent au moins une rangée 3b longitudinale de plaquettes de rive 8 associées articulées aux tringles 2, de telle sorte qu'elles empêchent les modules 4 d'échapper transversalement aux tringles 2.

Dans le mode de réalisation représenté, on prévoit deux rangées adjacentes 3b de plaquettes de rive 8 le long de chacune des rives de la bande 1. Il est clair qu'on peut en prévoir plus, ou moins, voire pas du tout dès lors qu'au moins une rangée 3a de plaquette 7 de renfort est prévue.

Les plaquettes 7, 8 de renfort ou de rive sont associées à pivotement libre aux tringles 2. De préférence, les tringles 2 comportent à chacune de leur extrémité des moyens qui empêchent le dégagement des plaquettes de rive 8 des tringles (rivets, goupilles, rondelles, circlips, soudure, écrasement ou autres ...). Les plaquettes de renfort 7 peuvent soit coulisser librement transversalement aux tringles 2, soit être limitées dans leurs déplacements transversaux par des moyens adéquats (goupilles, rondelles, circlips, déformation locale de la tringle ou autres ...)

Les plaquettes 7, 8 sont planes, de forme allongée, aux extrémités arrondies et percées d'orifices sensiblement circulaires d'axe transversal dont le diamètre intérieur est très légèrement supérieur au diamètre extérieur des tringles 2 qui sont aussi de section droite sensiblement circulaire. La hauteur (perpendiculaire au plan P) des plaquettes 7, 8 est voisine de celle des modules 4. Les orifices des plaquettes peuvent avoir une forme légèrement allongée pour autoriser un trajet sinueux de la bande 1. Les plaquettes sont disposées en alternance le long de la bande 1 pour former des rangées 3a, 3b de direction générale longitudinale.

Les moyens 3 d'association spécifiques sont de préférence inamovibles, c'est-à-dire que la structure est définie, dimensionnée et réalisée une fois pour toutes, de façon normalement indémontable en fonction de l'utilisation du dispositif transporteur. Bien entendu, cela n'exclut pas le fait que l'on poisse réparer cette structure en cas de problème grave. Cependant, une telle réparation ne sera pas instantanée. Cette disposition procure une plus grande fiabilité au transporteur selon l'invention.

Selon l'invention, les moyens d'entraînement peuvent coopérer uniquement avec les tringles 2 et/ou avec les moyens 3 d'association spécifiques des tringles entre elles décrits ci-dessus, c'est-à-dire avec les plaquettes de rive 8 ou intermédiaires de renfort 7. Pour ce faire, les plaquettes 7, 8 ou les moyens d'entraînement comporteront tous les organes nécessaires à leur coopération, et ce de façon connue en soit et non décrite plus en détail ci-après.

Dans le mode de réalisation représente sur les figures 1 à 3, chaque module 4 est constitué d'une grille formée d'une pluralité de longerons 9 comportant à chacune de leur extrémité 11 les moyens 5, 6 d'association aux tringles 2, ces longerons 9 étant espacés parallèles les uns des autres et s'étendant dans la direction longitudinale de la bande 1, et étant associés les un aux autres par une pluralité de traverses 10 espacées et parallèles les unes des autres qui s'étendent dans les directions transversales.

La section droite des longerons a avantageusement la forme d'un pentagone constitué d'une portion de rectangel vers le haut, et d'un triangle vers le bas.

La distance transversale séparant deux extrémités 11 de longerons 9 est supérieure à l'épaisseur transversale de l'extrémité 11 d'un longeron 9, de façon que les extrémités 11 des longerons 9 de deux modules 4 associés à une même tringle 2 sont intercalées les unes entre les autres sans frottement.

Chaque longeron 9 a au moins une extrémité 11, notamment l'extrémité 11″ située en aval, qui, vue de profil transversalement à la bande 1, a sensiblement la forme d'un "U" dont les ailes 12, 13 s'étendent longitudinalement sensiblement parallèlement au plan P du module 4, dont l'ouverture 14 est orientée vers l'extérieur du module 4, et dont le plan est perpendiculaire au plan P du module 4, de façon à constituer les moyens 5 d'association amovible du module 4 à une tringle 2 autorisant un déplacement longitudinal de cette tringle 2 dans le sens de son dégagement du module 4. La tringle 2 peut en effet librement se déplacer vers l'extérieur du module 4 entre les deux ailes 12, 13. L'ouverture 14 est légèrement supérieure au diamètre extérieur des tringles 2. La longueur des ailes 12, 13 est aussi supérieure (figure 1) au diamètre des tringles 2, de sorte que les modules 4 sont toujours portés par les tringles 2. Les déplacements de la tringle 2 vers l'intérieur du module 4 sont limités par le fond 17 du "U".

La grille définie par les longerons 9 et traverses 10 forme une face supérieure plane du module 4, sur laquelle la charge peut être posée, et qui définit la surface de transport.

Dans le mode de réalisation représenté sur les figures 1 à 3 chaque longeron 9 a son autre extrémité 11, notamment l'extrémité 11' située vers l'amont, qui, vue de profil transversalement à la bande 1, a sensiblement la forme d'un "C" dont l'ouverture 15 est orientée dans la direction perpendiculaire au plan P du module 4 à l'opposé de la face supérieure 16 du module 4, et dont le plan est perpendiculaire au plan P du module et parallèle à la direction longitudinale de la bande 1, de façon à constituer des moyens 6 d'articulation amovible du module 4 à l'autre tringle 2. Le diamètre intérieur de l'extrémité 11 en forme de "C" est légèrement supérieur au diamètre extérieur de la tringle 2. L'ouverture 15 est légèrement inférieure au diamètre extérieur de la tringle 2. Cette extrémité 11 est en matière légèrement élastique pour permettre son association à force par clippage sur la tringle 2. La matière plastique utilisée pour le reste du module 4 préférentiellement convient.

Les extrémités 11 des longerons 9 sont avantageusement arrondies. Les traverses 10 saillent des longerons 9 périphériques d'un module 4 pour assurer la continuité transversalement de la forme de la grille de la surface de transport et/ou pour maintenir les modules voisins 4 à une distance convenable, supérieure à l'épaisseur transversale de l'extrémité 11 d'un longeron 9.

Le nombre et la forme des traverses 10 et des longerons 9 pourront être adaptés au type d'utilisation du transporteur, c'est-à-dire à la charge transportée.

Dans le second mode de réalisation représenté sur les figures 4 et 5, chaque module 4 est constitué également d'une pluralité de longerons 9 parallèles espacés les uns des autres par une traverse 10 qui s'étend immédiatement en aval de l'extrémité 11 amont de chaque longeron 9. Cette extrémité 11' est constituée en forme de "C" comme précédemment décrit, pour réaliser les moyens 6 d'articulation amovible du module 4 à la tringle en amont 2'. L'extrémité 11" en aval de chaque longeron est également en forme de "U", comme précédemment décrit, l'ouverture 14 étant orientée vers l'aval. Cependent les ailes 12, 13 du "U" sont allongées longitudinalement, le fond 17 étant rapproché vers l'intérieur du module de sorte que la tringle en aval 2" peut se rapprocher localement de la tringle en amont 2' jusqu'à venir en butée contre le fond 17. Cette forme en "U allongé" permet aux tringles 2', 2"

de s'incliner légèrement l'une par rapport à l'autre, et donc à la bande 1 de suivre un trajet sinueux. Dans sa position normale, la tringle en aval 2" n'est pas en contact avec le fond 17 du "U" (figure 4).

La traverse 10 est associée à la mâchoire en aval 18" de l'extrémité en amont 11' des longerons 9, et est conformée en continuité selon la forme intérieure de cette mâchoire 18 sur son chant 19' orienté vers l'amont. Le chant 20 orienté vers la face supérieure 16 est légèrement incliné vers le bas, de l'amont vers l'aval et ce afin de faciliter les écoulements de fluide ou autres. Cette inclinaison est avantageusement comprise entre 15" et 20", notamment de l'ordre de 18" par rapport au plan P du module 4 et de la face supérieure 16. Les autres caractéristiques du premier mode de réalisation se retrouvent avantageusement dans le second mode de réalisation.

La hauteur (perpendiculairement au plan P) de l'extrémité en aval 11" des longerons 9 est avantageusement de l'ordre de celle des plaquettes 7, 8, et est supérieure à celle de l'extrémité en amont 11'.

Un dispositif selon l'invention a par exemple les caractéristiques dimensionnelles suivantes :
- largeur transversale hors tout d'un module 4 comprise entre 45 et 65 mm, notamment de l'ordre de 55 mm, ou en variante comprise entre 90 et 130 mm, notamment de l'odre de 105 mm.
- hauteur hors tout d'un module 4 comprise entre 5 et 15 mm, notamment de l'ordre de 8 mm.
- distance entre les tringles 2 comprise entre 10 et 100 mm, notamment de l'ordre de 19 mm ou de 50 mm.
- largeur transversale des longersons comprise entre 1 et 5 mm, notamment de l'ordre de 2 mm.
- distance séparant les longerons 9, ou au moins leurs extrémités 11 transversalement comprise entre 3 et 7 mm, notamment de l'ordre de 5 mm.
- diamètre extérieur des tringles 2 compris entre 4 et 6 mm, notamment de l'ordre de 5 mm.
- angle d'ouverture de l'ouverture 15 en forme de "C" compris entre 80" et 120", notamment de l'ordre de 100".
- hauteur des ailes 12, 13 du "U", et épaisseur des mâchoires 18 du "C" comprise entre 1 et 2 mm, notamment de l'ordre de 1,5 mm.
- largeur transversale totale de la bande 1 supérieur à 400 mm, notamment comprise entre 500 mm et 2 000 mm.
- allongement des ailes 12, 13 du "U" longitudinalement compris entre 3 et 15 mm dans le premier mode de réalisation, et de 10 mm dans le second mode de réalisation.

De préférence, la structure est métallique, notamment en acier, ou en acier inoxyable, et les modules 4 sont en matière synthétique montée ou coulée légère et de faible coût, notamment en polypropylène.

Des nervures de renfort des modules 4 pourront être prévues pour éviter la flexion des modules sous le poids de la charge si celui-ci est important.

Un dispositif de transporteur tel que décrit ci-dessus peut donc transporter des charges de poids élevé, notamment supérieur à 100 kg/m² de bande, bien que les modules soient en matière moins résistante, plus légère et meilleur marché que dans l'art antérieur.

Les modes de réalisation de l'invention décrits ci-dessous sont données uniquement à titre d'exemple, l'invention pouvant faire l'objet de nombreuses variantes évidentes à l'homme de métier.

## Revendications

1. Dispositif transporteur à bande sans fin dans lequel la bande est constituée d'une structure comportant des tringles (2) transversales espacées et parallèles les unes aux autres auxquelles et entre lesquelles sont associés à pivotement des modules (4) sensiblement plans de support de la charge, de façon à définir une surface continue de transport, chaque module (4) étant associé à deux tringles (2', 2") que se suivent dans la direction de déplacement de la bande, les tringles (2', 2") étant associées rigidement les unes aux autres par des moyens (3) d'association spécifiques, chaque modules (4) étant associé à au moins une tringle (2) par des moyens (5) d'association limitant ses déplacements par rapport à cette tringle (2) et perpendiculaire au plan P du module (4), mais autorisant un déplacement longitudinal de cette tringle (2) dans le sens de son dégagement du module (4) de sorte que l'effort d'entraînement de la bande (1) est transmis le long de la bande (1) part les moyens (3) d'association spécifiques des tringles entre elles et supporté uniquement par la structure de la bande (1), caractérisé en ce que les moyens (5, 6) d'association des modules (4) aux tringles (2) sont des moyens d'association amovible autorisant un démontage ou un montage des modules (4) de ou sur la structure.

2. Dispositif selon la revendication 1 caractérisé en ce que chaque module (4) est associé à la tringle située en aval (2") par des moyens (5) d'association autorisant un déplacement longitudinal de cette tringle en aval (2") par rapport au module (4) dans les sens de l'aval, c'est-à-dire de son également du module (4).

3. Dispositif selon l'une quelconque des revendications 1 et 2 caractérisé en ce que chaque module (4) est associé à la tringle située en amont (2') par des moyens (5) d'association autorisant un déplacement longitudinal de cette tringle en amont (2') par rapport au module (4) dans le sens de l'amont, c'est-à-dire de son dégagement du module (4).

4. Dispositif selon l'une quelconque des revendications 1 et 2 caractérisé en ce que chaque module (4) est associé à la tringle située en amont (2') par des moyens (6) d'articulation limitant ses déplacements par rapport à cette tringle (2') dans toutes les directions.

5. Dispositif selon l'une quelconque des revendications 1 et 3 caractérisé en ce que chaque module (4) est associé à la tringle située en aval (2") par des moyens (6) d'articulation limitant des déplacements par rapport à cette tringle (2") dans toutes les directions.

6. Dispositif selon l'une quelconque des revendications 1 à 3 caractérisé en ce que chaque module (4) est associé à chacune des tringles (2', 2") que le supportent par des moyens (5) d'association autorisant un déplacement longitudinal du module (4) dans le sens du dégagement de cette tringle (2', 2") du module (4).

7. Dispositif selon l'une quelconque des revendications 1 à 6 caractérisé en ce que les moyens d'entraînement coopèrant uniquement avec les tringles (2) et/ou les moyens (3) spécifique d'association des tringles (2) entre elles.

8. Dispositif selon l'une quelconque des revendications 1 à 7 caractérisé en ce que chaque module (4) est constitué d'une pluralité de longerons (9) comportant à chacune de leur extrémité (11) les moyens (5, 6) d'association aux tringles (2), ces longerons (9) étant espacés parallèles les uns des autres et s'étendant dans la direction longitudinale de la bande (1) et étant associés les uns aux autres par au moins une traverse (10) qui s'étend dans la direction transversale.

9. Dispositif selon la revendication 8 caractérise en ce que la distance transversale séparant deux extrémités (11) de longerons (9) est supérieure à l'épaisseur transversalement de l'extrémité (11) d'un longeron (9).

10. Dispositif selon l'une quelconque des revendications 8 et 9 caractérise en ce que chaque longeron (9) a au moins une extrémité (11) qui, vue de profil transversalement à la bande (1), a sensiblement la forme d'un U dont les ailes (12, 13) s'étendent longitudinalement sensiblement parallèlement au plan P du module (4), dont l'ouverture (14) est orientée vers l'extérieur du module (4), et dont le plan est perpendiculaire au plan P du module (4) de façon à constituer les moyens (5) d'association amovible du module (4) à une tringle (2) autorisant un déplacement longitudinal de cette tringle (2) dans le sens de son dégagement du module (4).

11. Dispositif selon la revendication 10 caractérisé en ce que chaque longeron (9) a son autre extrémité (11), qui, vue de profil transversalement à la bande (1), a sensiblement la forme d'un C dont l'ouverture (15) est orientée dans la direction perpendiculaire au plan P du module (4) à l'opposé de la face supérieure (16) du module (4) et dont le plan est perpendiculaire au plan P du module et parallèle à la direction longitudinale de la bande (1), de façon à constituer des moyens (6) d'articulation amovible du module (4) à l'autre tringle (2).

12. Dispositif selon l'une quelconque des revendications 8 à 11 caractérisé en ce que chaque module (4) comporte une seule traverse (10) associé aux longerons (9) immédiatement en aval de leur extrémité en amont (11').

13. Dispositif selon l'une quelconque des revendications 1 à 12 caractérisé en ce que la structure est métallique, et en ce que les modules (4) sont en matière synthétique moulée ou coulée légère et de faible coût, notamment en polypropylène.

0254604

FIG.1

FIG.2

FIG.4

FIG.5

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | EP-A-0 002 137 (U.M.E.C.-BOYDELL) * En entier * | 1-10 | B 65 G  17/06 |
| D,A | | 11 | |
| | --- | | |
| D,Y | FR-A-2 152 948 (U.M.E.C.-BOYDELL) * Figures 1,3,4; page 3, ligne 16 - page 5, ligne 20 * | 1-9 | |
| D,A | | 11,13 | |
| | --- | | |
| Y | GB-A-1 603 404  (N. GREENING) * En entier * | 10 | |
| A | | 1,8,9 | DOMAINES TECHNIQUES RECHERCHES (Int. Cl.4) B 65 G |
| | --- | | |
| A | EP-A-0 113 909  (THE LAITRAM CORP.) *  Figures 1-3; page 4, ligne 7 - page 5, ligne 14 * | 1,8,9 | |
| | ----- | | |

Le présent rapport de recherche a été établi pour toutes les revendications

| Lieu de la recherche | Date d'achèvement de la recherche | Examinateur |
|---|---|---|
| LA HAYE | 13-07-1987 | WERNER D.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82